# EUROPÄISCHE PATENTSCHRIFT

(11) **EP 3 987 992 B1**
(45) Veröffentlichungstag und Bekanntmachung des Hinweises auf die Patenterteilung: **22.03.2023**
(21) Anmeldenummer: 21204367.3
(22) Anmeldetag: 25.10.2021
(51) Int. Cl.: A47L 5/28, A47L 9/28

(54) **MOBILES HAUSHALTSGERÄT MIT EINEM DISPLAY**
MOBILE DOMESTIC APPLIANCE WITH A DISPLAY
APPAREIL ÉLECTROMÉNAGER MOBILE DOTÉ D'UN AFFICHAGE

(30) Priorität: 26.10.2020 DE 102020128096
(43) Veröffentlichungstag der Anmeldung: 27.04.2022
(73) Patentinhaber: Vorwerk & Co. Interholding GmbH, 42275 Wuppertal (DE)
(72) Erfinder: Isenberg, Gerhard, 50668 Köln (DE); Delfs, Jan, 53225 Bonn (DE); Ehring, Ingo, 46238 Bottrop (DE); Bezsonov, Viktor, 40211 Düsseldorf (DE)
(74) Vertreter: Müller, Enno

(56) Entgegenhaltungen:
- KR-A- 20200 027 320
- US-A1- 2014 237 755
- US-A1- 2017 196 421

## Beschreibung

### Gebiet der Technik

Die Erfindung betrifft ein mobiles Haushaltsgerät, insbesondere Bodenbearbeitungsgerät, mit einem Gerätegehäuse, einem einen Teil einer Außenhülle des Gerätegehäuses bildenden Display, einer Detektionseinrichtung zur Detektion eines einen aktuell von dem Haushaltsgerät ausgeführten Betriebsmodus kennzeichnenden Betriebsparameters und einer Auswerte- und Steuereinrichtung zur Ermittlung des Betriebsmodus anhand des Betriebsparameters und zur Darstellung mindestens einer den aktuellen Betriebsmodus betreffenden Information auf dem Display.

Daneben betrifft die Erfindung ein Verfahren zum Betrieb eines mobilen Haushaltsgerätes, insbesondere Verfahren zum Betrieb eines Bodenbearbeitungsgerätes, wobei ein einen aktuell von dem Haushaltsgerät ausgeführten Betriebsmodus kennzeichnender Betriebsparameter detektiert wird, wobei anhand des detektierten Betriebsparameters der aktuelle Betriebsmodus ermittelt wird und wobei eine den ermittelten aktuellen Betriebsmodus betreffende Information auf einem Display des Haushaltsgerätes dargestellt wird.

### Stand der Technik

Mobile Haushaltsgeräte mit einem Display zur Darstellung von Informationen sind im Stand der Technik hinreichend bekannt. Die mobilen Haushaltsgeräte können in Bezug auf deren Standort autonom oder manuell durch einen Nutzer verlagerbare Geräte sein.

Es ist bekannt, Informationen, die den Betrieb des Haushaltsgerätes, Merkmale der Umgebung oder auch Auswahlmöglichkeiten für den Betrieb des Haushaltsgerätes betreffen, auf einem Display des Haushaltsgerätes anzuzeigen. Dies erfolgt üblicherweise mit einer relativ zu dem Display festen Darstellungsrichtung der Informationen. Üblicherweise ist die Darstellungsrichtung dabei so, dass ein Nutzer die Informationen, insbesondere Textinformationen, optimal lesen kann, wenn er sich - bezogen auf eine Hauptfortbewegungsrichtung des mobilen Haushaltsgerätes - vor dem Haushaltsgerät befindet. Im Stand der Technik sind des Weiteren unterschiedliche Arten von Detektionseinrichtungen für sich selbsttätig fortbewegende Bodenbearbeitungsgeräte bekannt, beispielsweise Ultraschallsensoren, Kontaktsensoren, Kamerasysteme und dergleichen.

Da sich die Position des Nutzers relativ zu dem Haushaltsgerät betriebsbedingt ändern kann, kann es zu Situationen kommen, in welchen der Nutzer auf dem Display angezeigte Informationen "auf dem Kopf" lesen muss. Ein mobiles Haushaltsgerät gemäß dem Oberbegriff des Anspruchs 1 ist z.B. aus USA-2017196421 bekannt.

### Zusammenfassung der Erfindung

Ausgehend von dem vorgenannten Stand der Technik ist es daher Aufgabe der Erfindung, ein mobiles Haushaltsgerät zu schaffen, bei welchem die Darstellung von Informationen auf dem Display noch weiter verbessert ist.

Zur Lösung dieser Aufgabe wird ein mobiles Haushaltsgerät vorgeschlagen, dessen Auswerte- und Steuereinrichtung eingerichtet ist, eine Darstellungsrichtung der auf dem Display dargestellten Information abhängig von dem ermittelten aktuellen Betriebsmodus des Haushaltsgerätes zu variieren, wobei die Detektionseinrichtung einen Sensor aufweist, welcher ausgewählt ist aus der Menge: Sensor, welcher eingerichtet ist, eine relative Orientierung eines relativ zu dem Gerätegehäuse verstellbaren Handgriffs des Haushaltsgerätes zu detektieren; Kontaktsensor zum Detektieren eines mechanischen Kontaktes des Haushaltsgerätes mit einer Servicestation; Akkumulator-Überwachungseinrichtung, welche eingerichtet ist, ein Laden oder Entladen des Akkumulators zu detektieren.

Erfindungsgemäß wird somit der momentan von dem Haushaltsgerät ausgeführte Betriebsmodus ermittelt, um eine oder mehrere Informationen für einen Nutzer vorteilhaft auf dem Display darzustellen. Insbesondere ist die Auswerte- und Steuereinrichtung dabei ausgebildet, indirekt eine Bedienrichtung oder zumindest Blickrichtung des Nutzers auf das Display in Abhängigkeit von aktuellen Betriebsgrößen des Haushaltsgerätes zu mutmaßen. Die Orientierung der auf dem Display angezeigten Information wird dabei in Abhängigkeit von einem momentanen Betriebsmodus des Haushaltsgerätes angepasst, um dem Nutzer je nach einer betriebsabhängigen üblichen Orientierung des Haushaltsgerätes eine bessere Lesbarkeit der Information zu ermöglichen. Dabei wird berücksichtigt, aus welcher Richtung der Nutzer bei einem bestimmten Betriebsmodus üblicherweise auf das Display des Haushaltsgerätes blickt. Somit ändert sich eine Anzeige der Information auf dem Display beispielsweise, wenn das mobile Haushaltsgerät von einer Ladestellung an einer Basisstation in eine davon abweichende Gebrauchsstellung während der Durchführung einer Haushaltstätigkeit des Haushaltsgerätes wechselt.

Die Detektionseinrichtung weist zur Detektion eines Betriebsparameters des Haushaltsgerätes einen Sensor auf, welcher ausgewählt ist aus der Menge: Sensor, welcher eingerichtet ist, eine relative Orientierung eines relativ zu dem Gerätegehäuse verstellbaren Handgriffs des Haushaltsgerätes zu detektieren; Kontaktsensor zum Detektieren eines mechanischen Kontaktes des Haushaltsgerätes mit einer Servicestation; Akkumulator-Überwachungseinrichtung, welche eingerichtet ist, ein Laden oder Entladen des Akkumulators zu detektieren. Neben den vorgenannten sind auch noch andere Arten von Sensoren denkbar, welche einen Parameter messen, der einen Aufschluss über einen aktuell von dem Haushaltsgerät ausgeführten Betriebsmodus zulässt. Gemäß einer Ausführung wird beispielsweise eine Gebrauchslage des Haushaltsgerätes während des ausgeführten Betriebsmodus detektiert. Dies kann mittels eines Lagesensors erfolgen, welcher die Orientierung des Haushaltsgerätes erkennt. Des Weiteren kann das Haushaltsgerät beispielsweise einen relativ zu dem Gerätegehäuse verlagerbaren Handgriff aufweisen, welcher in Abhängigkeit von einem gewählten Betriebsmodus eine bestimmte Orientierung relativ zu dem Gerätegehäuse des Haushaltsgerätes einnimmt. Somit lässt sich die Kenntnis über die Position bzw. Orientierung des Handgriffs für die Darstellung von Informationen auf dem Display des Haushaltsgerätes nutzen. Wenn das Haushaltsgerät sich beispielsweise in einer Ruheposition, insbesondere Parkposition in einer Abstellkammer, oder ähnlichem, befindet oder an eine Ladestation oder Servicestation angedockt ist, kann ein Kontaktsensor des Haushaltsgerätes oder eines mit dem Haushaltsgerät verbundenen Vorsatzgerätes das Andocken an einen entsprechenden Gegenpart einer Bodenfläche, der Ladestation oder Servicestation erkennen. Des Weiteren kann die Detektionseinrichtung ausgebildet sein, Zustände einer Akkumulatorschaltung zu detektieren. Beispielsweise kann eine entsprechend vorgeschlagene Akkumulator-Überwachungseinrichtung erkennen, ob derzeit Energie aus dem Akkumulator entnommen oder diesem zugeführt wird. In Abhängigkeit davon kann beispielsweise darauf geschlossen werden, dass das Haushaltsgerät derzeit in einem Arbeitsmodus betrieben wird und dafür Energie aus dem Akkumulator entnimmt. Stellt die Akkumulator-Überwachungseinrichtung hingegen fest, dass derzeit Energie in den Akkumulator eingespeist wird, kann darauf geschlossen werden, dass der Akkumulator an eine Ladestation oder ein mobiles Ladenetzteil angeschlossen ist. Um dann unterscheiden zu können, ob das Haushaltsgerät beispielsweise an einer Ladestation steht oder liegend an einem Ladenetzteil angeschlossen ist, kann zusätzlich ein mittels eines Lagesensors gemessener Parameter ausgewertet werden. Durch eine Kombination der Informationen der Akkumulator-Überwachungseinrichtung und des Lagesensors kann dann ein aktueller Betriebsmodus des Haushaltsgerätes bestimmt werden. Abhängig von diesen Informationen kann die Auswerte- und Steuereinrichtung dann wiederum die Darstellungsrichtung auf dem Display anpassen. Des Weiteren kann die Detektionseinrichtung des Haushaltsgerätes beispielsweise auch ausgebildet sein, einen definierten Hilfsstrom zu detektieren, welchen nur die ortsfeste Ladestation abgeben kann. Sofern das Haushaltsgerät dann nicht mit einer Ladestation, sondern vielmehr einem mobilen Ladenetzteil verbunden ist, entfällt der Hilfsstrom und die Detektionseinrichtung des Haushaltsgerätes kann dadurch erkennen, dass das Haushaltsgerät nicht mit einer Ladestation verbunden ist.

Es wird vorgeschlagen, dass die Auswerte- und Steuereinrichtung eingerichtet ist, abhängig von dem Betriebsmodus auf eine räumliche Orientierung des Haushaltsgerätes und/oder eine Blickrichtung eines Nutzers auf das Haushaltsgerät während des Betriebsmodus zu schließen. Dieser Ausgestaltung liegt die Erkenntnis zugrunde, dass bestimmte Betriebsmodi des Haushaltsgerätes üblicherweise mit einer bestimmten räumlichen Orientierung des Haushaltsgerätes relativ zu der Umgebung bzw. relativ zu der Position und Orientierung des Nutzers einhergehen. In dem Fall, dass es sich bei dem Haushaltsgerät beispielsweise um einen handgeführten Staubsauger handelt, welchen der Nutzer während eines Arbeitsbetriebs üblicherweise vor sich her schiebt, blickt der Nutzer während des Arbeitsbetriebs in einer sogenannten "Sechs Uhr Blickrichtung" auf das Display. Wenn derselbe Staubsauger stattdessen gerade mit einer Basisstation verbunden ist, um dessen Akkumulator aufzuladen, steht der Staubsauger üblicherweise aufrecht vor einer Wand und der Nutzer blickt relativ frontal auf das Display, beispielsweise in einer sogenannten "12 Uhr Blickrichtung", welche der Blickrichtung während des Arbeitsbetriebs entgegengesetzt ist. Damit die Auswerte- und Steuereinrichtung des Haushaltsgerätes abhängig von dem Betriebsmodus auf die Orientierung des Haushaltsgerätes oder die Blickrichtung des Nutzers - und damit die benötigte Darstellungsrichtung der Informationen auf dem Display - schließen kann, greift die Auswerte- und Steuereinrichtung auf einen Datenspeicher zu, welcher definierte Zuordnungen zwischen dem jeweiligen Betriebsmodus und der räumlichen Orientierung des Haushaltsgerätes bzw. der Blickrichtung des Nutzers enthält.

Insbesondere wird vorgeschlagen, dass das Haushaltsgerät einen kommunikationstechnisch mit der Auswerte- und Steuereinrichtung verbundenen Datenspeicher aufweist, in welchem einerseits eine Mehrzahl von möglichen Betriebsmodi des Haushaltsgerätes, und andererseits den Betriebsmodi zugeordnete Darstellungsrichtungen von Informationen auf dem Display gespeichert sind. Die innerhalb des Datenspeichers gespeicherten Daten können beispielsweise in Tabellenform vorliegen, miteinander verlinkt sein oder auf sonstige dem Fachmann bekannte Art und Weise vorliegen. Wesentlich ist, dass die Auswerte- und Steuereinrichtung in Abhängigkeit von der Kenntnis über den aktuellen Betriebsmodus des Haushaltsgerätes Kenntnis über die einzustellende Darstellungsrichtung erlangen kann, um in Abhängigkeit davon dann die Darstellungsrichtung von Informationen auf dem Display zu steuern.

Des Weiteren wird vorgeschlagen, dass der Betriebsmodus ausgewählt ist aus der Menge: Arbeitsmodus, bei welchem der Nutzer das Haushaltsgerät bestimmungsgemäß zur Ausführung einer Haushaltsaufgabe, insbesondere für eine Bodenbearbeitung, anwendet; Lademodus, bei welchem das Haushaltsgerät zum Laden eines Akkumulators an ein Ladegerät oder eine Ladestation angeschlossen ist; Servicemodus, bei welchem das Haushaltsgerät zum Empfangen eines Service an eine Servicestation angedockt ist; Ruhemodus, bei welchem das Haushaltsgerät außerhalb eines Arbeitsmodus, Lademodus und Servicemodus abgestellt ist. Die möglichen Betriebsmodi des Haushaltsgerätes sind somit zumindest ein Arbeitsmodus, ein Lademodus, ein Servicemodus und ein Ruhemodus. All diese Betriebsmodi bedingen üblicherweise unterschiedliche Orientierungen des Haushaltsgerätes relativ zu dessen Umgebung bzw. zu einem Nutzer, welcher auf das Haushaltsgerät bzw. dessen Display blickt. Es kann auch vorgesehen sein, dass das Haushaltsgerät nicht nur in einem einzigen Arbeitsmodus betrieben werden kann, sondern vielmehr in einer Vielzahl zueinander verschiedener Arbeitsmodi. In dem vorgenannten Fall, dass es sich bei dem Haushaltsgerät beispielsweise um einen Staubsauger handelt, kann ein erster Arbeitsmodus beispielsweise eine Reinigung einer Bodenfläche beinhalten, ein zweiter Arbeitsmodus eine Reinigung einer Überbodenfläche, beispielsweise eines Regalbodens, einer Fußleiste oder ähnlichem, und ein dritter Arbeitsmodus eine Reinigung von Wand-Decken-Bereichen, welche üblicherweise eine Überkopfanwendung des Haushaltsgerätes erfordert. In all diesen Arbeitsmodi nimmt der Nutzer eine andere Stellung relativ zu dem Haushaltsgerät ein, so dass das Display des Haushaltsgerätes unter, neben oder über dem Nutzer angeordnet sein kann und der Nutzer somit von oben, der Seite bzw. von unten auf das Display blickt. Wenn man beispielsweise eine Bodenbearbeitung und eine Deckenbearbeitung vergleicht, ist die Blickrichtung des Nutzers auf das Display um ca. 180 Grad zueinander gedreht, so dass die Auswerte- und Steuereinrichtung vorzugsweise ausgebildet ist, die Darstellungsrichtung für die auf dem Display dargestellten Informationen um +/- 180 Grad zu einer vorausgehenden Darstellungsrichtung zu drehen.

Des Weiteren kann vorgesehen sein, dass die auf dem Display des Haushaltsgerätes dargestellte Information abhängig von dem ermittelten aktuellen Betriebsmodus des Haushaltsgerätes ausgewählt ist aus der Menge: Information über den Ladezustand des Akkumulators, Information über den Betriebsmodus des Haushaltsgerätes, Information über ein an das Haushaltsgerät angeschlossenes Zubehör. Gemäß dieser Ausführung wird nicht nur die Darstellungsrichtung der Information auf dem Display des Haushaltsgerätes in Abhängigkeit von dem aktuellen Betriebsmodus des Haushaltsgerätes angepasst, sondern vielmehr auch die Art bzw. der Inhalt der dargestellten Information. Dadurch ist die Auswerte- und Steuereinrichtung des Haushaltsgerätes ausgebildet, den Inhalt der auf dem Display dargestellten Informationen zu filtern und an den jeweiligen momentanen Betriebsmodus anzupassen. Dadurch erhält der Nutzer vorteilhaft nur solche Informationen, welche momentan relevant sind, so dass der Nutzer nicht mit einer Vielzahl von Informationen oder Anzeigefeldern überfordert wird, die zum Teil keine Relevanz für den derzeitigen Betriebsmodus aufweisen. Beispielsweise kann die auf dem Display dargestellte Information eine Information über den Ladezustand des Akkumulators sein, wenn der Akkumulator sich aktuell in einem Arbeitsmodus oder einem Lademodus befindet. Während eines Arbeitsmodus des Haushaltsgerätes kann zusätzlich beispielsweise eine Information über ein mit dem Haushaltsgerät verbundenes Zubehör auf dem Display dargestellt werden. Insgesamt erfolgt somit eine gezielte Auswahl der anzuzeigenden und für den jeweiligen Anwendungsfall des Haushaltsgerätes relevanten Informationen aus einer Vielzahl von grundsätzlich verfügbaren und anzeigbaren Informationen. Die Darstellung einer oder mehrerer Informationen auf dem Display wird für den Nutzer besonders gut lesbar. Der Nutzer wird nicht mit unnötig vielen irrelevanten Informationen auf dem Display überfordert, sondern erhält lediglich definierte, vorgefilterte Informationen aus einer Menge von prinzipiell von der Detektionseinrichtung des Haushaltsgerätes detektieren Parametern. Insgesamt ist die Auswerte- und Steuereinrichtung gemäß vorstehender Beschreibung somit eingerichtet, aus einer Mehrzahl von verfügbaren Informationen nur mindestens eine solche auszuwählen und auf dem Display darzustellen, welche für den aktuellen Betriebsmodus des Haushaltsgerätes als relevant definiert ist.

Des Weiteren kann das Display ein trennbarer oder nicht trennbarer Bestandteil des Gerätegehäuses oder ein trennbarer oder nicht trennbarer Bestandteil eines Akkumulators des Haushaltsgerätes sein. Es kann des Weiteren vorgesehen sein, dass der Akkumulator ein trennbarer oder nicht trennbarer Bestandteil des Haushaltsgerätes ist. Das Display und/oder der Akkumulator kann somit wechselbar ausgestaltet sein. Des Weiteren kann eine Fläche des Akkumulators oder das Display auch einen Teil der Außenhülle des Gerätegehäuses bilden. Gemäß einer Ausgestaltung kann der Akkumulator aus dem Haushaltsgerät oder dem Gerätegehäuse entnommen werden. Das Display kann entweder in dem Gerätegehäuse, oder in dem Akkumulator verbaut sein, entweder trennbar oder nicht trennbar relativ zu diesem. Alternativ kann der Akkumulator auch kein Bestandteil der Außenhülle des Gerätegehäuses sein, sondern relativ zu einer Außenkontur des Gerätegehäuses in dieses zurückverlagert sein, wobei das Display dann durch eine Art Fenster von außerhalb des Haushaltsgerätes abgelesen werden kann. Des Weiteren kann der Akkumulator auch fest mit dem Haushaltsgerät verbunden, d. h. nicht ohne Zerstörung von diesem trennbar, sein. Das Haushaltsgerät kann neben dem vorgeschlagenen Display auch noch andere Anzeigeelemente aufweisen. Die Anzeigeelemente können beispielsweise einzelne LEDs sein.

Neben dem vorgenannten mobilen Haushaltsgerät wird mit der Erfindung des Weiteren auch ein Verfahren zum Betrieb eines mobilen Haushaltsgerätes, insbesondere ein Verfahren zum Betrieb eines Bodenbearbeitungsgerätes, vorgeschlagen, wobei ein einen aktuell von dem Haushaltsgerät ausgeführten Betriebsmodus kennzeichnender Betriebsparameter detektiert wird, wobei anhand des detektierten Betriebsparameters der aktuelle Betriebsmodus ermittelt wird und wobei eine den ermittelten aktuellen Betriebsmodus betreffende Information auf einem Display des Haushaltsgerätes dargestellt wird, und wobei eine Darstellungsrichtung der auf dem Display dargestellten Information abhängig von dem ermittelten aktuellen Betriebsmodus des Haushaltsgerätes variiert wird, wobei die Detektionseinrichtung einen Sensor aufweist, welcher ausgewählt ist aus der Menge: Sensor, welcher eingerichtet ist, eine relative Orientierung eines relativ zu dem Gerätegehäuse verstellbaren Handgriffs des Haushaltsgerätes zu detektieren; Kontaktsensor zum Detektieren eines mechanischen Kontaktes des Haushaltsgerätes mit einer Servicestation; Akkumulator-Überwachungseinrichtung, welche eingerichtet ist, ein Laden oder Entladen des Akkumulators zu detektieren. Insbesondere kann im Rahmen der Ausführung des Verfahrens vorgesehen sein, dass eine Auswerte- und Steuereinrichtung des Haushaltsgerätes abhängig von dem Betriebsmodus auf eine räumliche Orientierung des Haushaltsgerätes und/oder eine Blickrichtung eines Nutzers auf das Haushaltsgerät während des Betriebsmodus schließt. Das vorgeschlagene Verfahren kann insbesondere ein solches zum Betrieb eines erfindungsgemäßen mobilen Haushaltsgerätes sein. Die in Bezug auf das Verfahren relevanten Merkmale und Vorteile ergeben sich wie zuvor in Bezug auf das mobile Haushaltsgerät beschrieben. Zur Vermeidung von Wiederholungen wird diesbezüglich auf die vorstehende Beschreibung verwiesen.

### Kurze Beschreibung der Zeichnungen

Im Folgenden wird die Erfindung anhand von Ausführungsbeispielen näher erläutert. Es zeigen:
- Fig. 1: ein mobiles Haushaltsgerät während eines ersten Betriebsmodus,
- Fig. 2: das Haushaltsgerät während eines zweiten Betriebsmodus.

### Beschreibung der Ausführungsformen

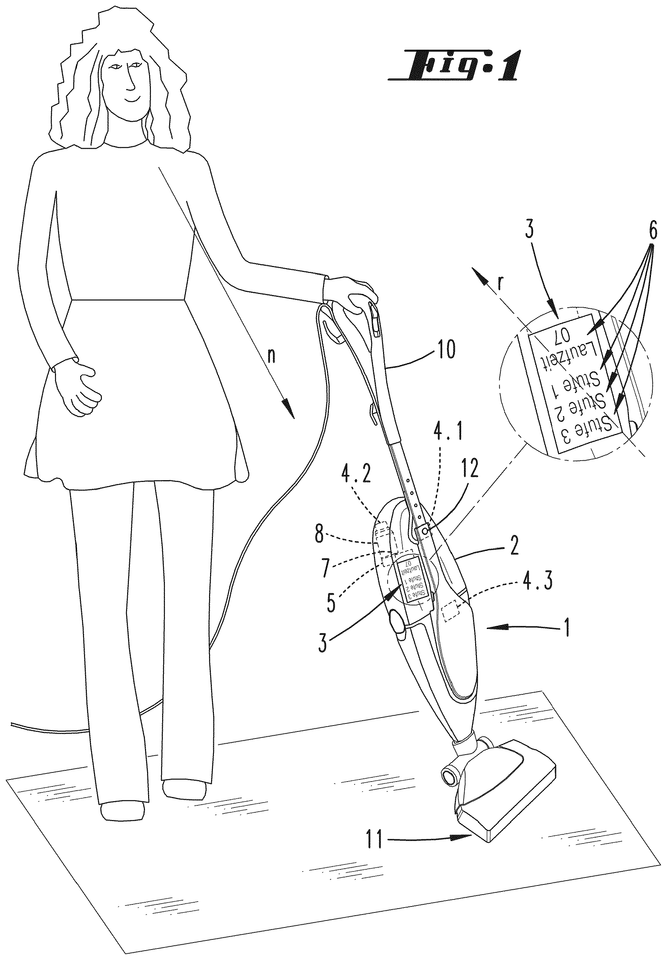

Figur 1 zeigt ein mobiles Haushaltsgerät 1, welches hier lediglich beispielhaft als ein durch einen Nutzer über eine zu bearbeitende Bodenfläche schiebbares Haushaltsgerät 1 ausgebildet ist. Hier handelt es sich bei dem Haushaltsgerät 1 beispielsweise um einen Staubsauger, ein Wischgerät oder ein kombiniertes Saug-Wisch-Gerät. Das Haushaltsgerät 1 weist ein Gerätegehäuse 2 und einen daran schwenkbeweglich gelagerten Handgriff 10 auf. In das Gerätegehäuse 2 ist ein Display 3 flächenbündig integriert, welches lösbar oder nicht lösbar mit dem Gerätegehäuse 2 verbunden ist. Das Haushaltsgerät 1 weist des Weiteren einen Akkumulator 8 auf, welcher zur Energiebereitstellung für elektrische Verbraucher des Haushaltsgerätes 1 dient. Elektrische Verbraucher können beispielsweise Elektromotoren sein, die dem Betrieb eines Antriebssystems des Haushaltsgerätes 1, einer Reinigungseinrichtung oder ähnlichem dienen. Alternativ zu einer Integration in das Gerätegehäuse 2 kann das Display 3 auch in eine Oberfläche des Akkumulators 8 integriert sein, wobei das Gerätegehäuse 2 dann eine Aussparung oder ein Sichtfenster aufweist, durch welche(s) das Display 3 von außen ablesbar ist. Eine Auswerte- und Steuereinrichtung 5 des Haushaltsgerätes 1 steuert eine Darstellung von Informationen 6, welche für den Nutzer bei der Anwendung des Haushaltsgerätes 1 nützlich sind, auf dem Display 3. Die Darstellung der Informationen 6 erfolgt mit einer Darstellungsrichtung r, welche ausgehend von dem Blickwinkel des Nutzers einer Leserichtung von "links oben" nach "rechts unten" entspricht. Der Auswerte- und Steuereinrichtung 5 ist ein Datenspeicher 7 zugeordnet, welcher eine Vielzahl von Daten über unterschiedliche Betriebsmodi des Haushaltsgerätes 1, insbesondere die Betriebsmodi betreffende Informationen 6 für den Nutzer beinhaltet. Des Weiteren beinhaltet der Datenspeicher 7 - wie im Folgenden noch erläutert wird - Informationen über den Betriebsmodi zugeordnete übliche Blickrichtungen n des Nutzers auf das Haushaltsgerät 1 während des jeweiligen Betriebsmodus und damit gleichzeitig auch eine dem Betriebsmodus zugeordnete räumliche Orientierung des Haushaltsgerätes1 während dieses Betriebsmodus.

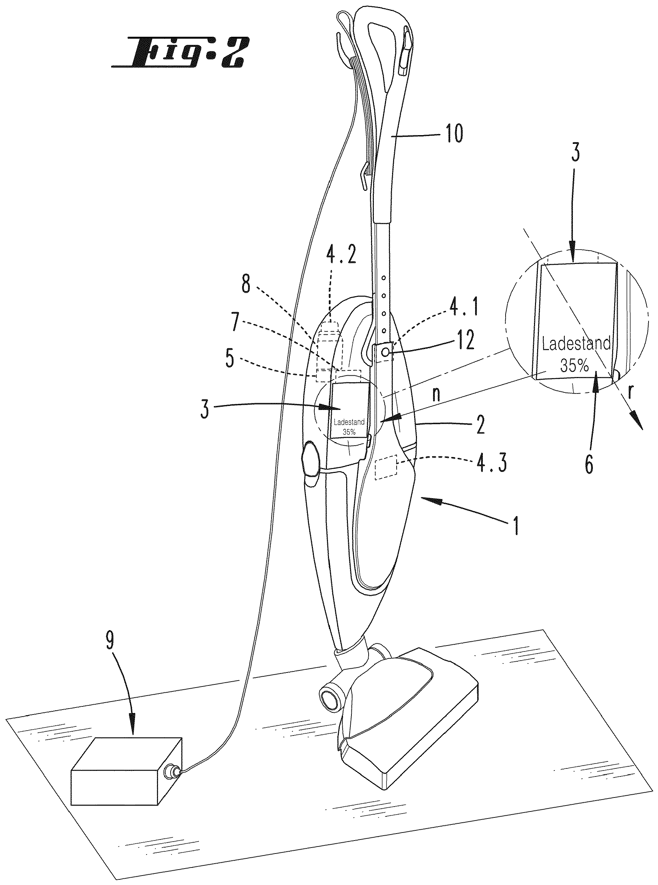

Das Haushaltsgerät 1 weist hier mehrere mögliche Betriebsmodi auf, nämlich beispielsweise einen Arbeitsmodus, bei welchem das Haushaltsgerät 1 eine Bodenbearbeitung vornimmt (Figur 1), einen Lademodus, in welchem der Akkumulator 8 des Haushaltsgerätes 1 mittels eines Ladegerätes 9 aufgeladen wird (Figur 2) und einen Ruhemodus, bei welchem das Haushaltsgerät 1 ausgeschaltet ist und beispielsweise in einer Kammer aufbewahrt wird. Es können weitere Betriebsmodi vorgesehen sein, beispielsweise ein Servicemodus oder mehrere Servicemodi, bei welchen das Haushaltsgerät 1 einen Service von einer Servicestation empfängt, beispielsweise eine Übergabe oder Wartung eines mit dem Gerätegehäuse 2 verbundenen Zubehörs 11. Bei einem solchen Zubehör 11 kann es sich beispielsweise um eine Saugdüse, eine rotierende Bodenbearbeitungsbürste, eine Wischplatte, einen Poliervorsatz oder ähnliches handeln.

Zur Ermittlung eines aktuell von dem Haushaltsgerät 1 ausgeführten Betriebsmodus weist das Haushaltsgerät 1 eine Sensorik auf, welche hier beispielsweise insgesamt drei einzelne Detektionseinrichtungen 4.1, 4.2 und 4.3 beinhaltet. Die Detektionseinrichtung 4.1 ist hier einem Gelenk 12 zwischen dem Gerätegehäuse 2 und dem Handgriff 10 zugeordnet und ausgebildet, eine aktuelle Stellung des variablen Handgriffs 10 relativ zu dem Gerätegehäuse 2 zu detektieren. Beispielsweise kann es sich bei der Detektionseinrichtung 4.1 um einen Kontaktsensor oder optischen Sensor handeln, welcher eine Positionierung des Handgriffs 10 in einer definierten Schwenkstellung detektieren kann. Die Detektionseinrichtung 4.2 ist hier beispielsweise Teil einer Akkumulator-Überwachungseinrichtung, welche erkennen kann, ob momentan Energie aus dem Akkumulator 8 entnommen oder dem Akkumulator 8 zugeführt wird. Die Akkumulator-Überwachungseinrichtung kann Teil einer Ladesteuerung sein. Die Detektionseinrichtung 4.3 ist beispielsweise ein Lagesensor, welcher eine Orientierung des Haushaltsgerätes 1 messen kann. Besonders bevorzugt handelt es sich bei dem Lagesensor um ein Gyroskop oder einen Beschleunigungssensor. Somit kann die Detektionseinrichtung 4.3 ermitteln, ob das Haushaltsgerät 1 beispielsweise, wie in Figur 1 dargestellt, aufrecht steht oder zur Bearbeitung von Überbodenflächen beispielsweise waagerecht gehalten wird oder zur Bearbeitung eines Deckenbereiches eines Raumes kopfüber nach oben gehalten wird, so dass sich das Zubehör 11 über dem Nutzer befindet.

Um die Erfindung weiter zu erläutern, zeigen die Figuren 1 und 2 im Vergleich zwei unterschiedliche Betriebsmodi des Haushaltsgerätes 1. In der Figur 1 schiebt ein Nutzer das Haushaltsgerät 1 während eines Arbeitsmodus über eine zu bearbeitende Bodenfläche, wobei er das Haushaltsgerät 1 in regelmäßigen oder unregelmäßigen Bewegungen vor sich her schiebt bzw. zu sich hin zieht. Das Gerätegehäuse 2 des Haushaltsgerätes 1 ist dabei üblicherweise im Wesentlichen aufrecht (bezogen auf eine Längserstreckung). Der Nutzer befindet sich hinter dem Haushaltsgerät 1, während er den Handgriff 10 zur Verlagerung des Haushaltsgerätes 1 anfasst. In diesem Betriebsmodus blickt der Nutzer in einer Blickrichtung n auf das Display 3, welche im Wesentlichen einer Richtung von oben auf das Display 3 entspricht. Dies kann allgemein auch als "Sechs Uhr Blickrichtung" bezeichnet werden. In dieser Blickrichtung n steuert die Auswerte- und Steuereinrichtung 5 des Haushaltsgerätes 1 die Darstellung von Informationen 6 auf dem Display 3 derart, dass die Informationen 6 gemäß der Darstellung in Figur 1 von außen betrachtet "auf dem Kopf" stehen. Dadurch kann der von oben auf das Display 3 blickende Nutzer die Informationen 6 in üblicher Art und Weise lesen.

Die Figur 2 zeigt das Haushaltsgerät 1 demgegenüber in einem von Figur 1 verschiedenen Betriebsmodus, welcher dort ein Lademodus ist, in welchem der Akkumulator 8 des Haushaltsgerätes 1 mittels eines Ladegerätes 9 geladen wird. Das Ladegerät 9 ist hier beispielsweise ein mobiles Ladenetzteil. Während des Ladebetriebs ist das Haushaltsgerät 1 ebenfalls in einer aufrechten Stellung und der Nutzer blickt üblicherweise frontal auf das Display 3, so dass er auf dem Display 3 angezeigte Informationen 6 in üblicher Art und Weise von links oben nach rechts unten liest. Die Blickrichtung n des Nutzers entspricht dabei einer sogenannten "12 Uhr Blickrichtung". Die Darstellungsrichtung r der Informationen 6 auf dem Display 3 ist entsprechend im Wesentlichen gegenläufig ausgerichtet.

Damit die Auswerte- und Steuereinrichtung 5 des Haushaltsgerätes 1 die Informationen 6 so auf dem Display 3 anordnen und darstellen kann, dass ein Nutzer je nach dem aktuell von dem Haushaltsgerät 1 ausgeführten Betriebsmodus die Informationen 6 in üblicher Art und Weise von dem Display 3 ablesen kann, nämlich bezogen auf seine Blickrichtung n von "links oben" nach "rechts unten" betrachtet, ist die Auswerte- und Steuereinrichtung 5 ausgebildet, zunächst den aktuellen Betriebsmodus des Haushaltsgerätes 1 zu bestimmen und in Abhängigkeit von dem ermittelten Betriebsmodus auf die aktuelle räumliche Orientierung des Haushaltsgerätes 1 bzw. des Displays 3 zu schließen. Des Weiteren bestimmt die Auswerte- und Steuereinrichtung 5 des Haushaltsgerätes 1, welche von mehreren verfügbaren Informationen 6 dem Nutzer vorteilhaft auf dem Display 3 angezeigt werden, da nicht alle verfügbaren Informationen 6 für den aktuell von dem Haushaltsgerät 1 ausgeführten Betriebsmodus tatsächlich auch relevant sind.

Bei dem Betriebsmodus, nämlich dem Arbeitsmodus, gemäß Figur 1 erkennt die Detektionseinrichtung 4.1 als einen ersten Betriebsparameter, dass der Handgriff 10 in Verlängerung der Längserstreckung des Gerätegehäuses 2 an dem Haushaltsgerät 1 orientiert ist. Ausgehend von dieser Stellung des Handgriffs 10 schließt die Auswerte- und Steuereinrichtung 5 darauf, dass sich der Nutzer wahrscheinlich hinter dem Haushaltsgerät 1, nämlich auf der Seite des Handgriffs 10 befindet. Zur Auswertung greift die Auswerte- und Steuereinrichtung 5 auf den Datenspeicher 7 des Haushaltsgerätes 1 zu, in welchem zu dem jeweiligen Betriebsmodus des Haushaltsgerätes 1 korrespondierende Detektionssignale der Detektionseinrichtungen 4.1, 4.2 und 4.3 gespeichert sind. In der Ausführung gemäß Figur 1 detektiert die weitere Detektionseinrichtung 4.2 als zusätzlichen Betriebsparameter, dass derzeit Energie aus dem Ackumulator 8 entnommen wird. Die Detektionseinrichtung 4.3, nämlich der Lagesensor, erkennt darüber hinaus, dass das Haushaltsgerät 1 aufrecht steht, nämlich so, dass sich das Zubehör 11 unter dem Gerätegehäuse 2 und dem Handgriff 10 befindet. Die von den Detektionseinrichtungen 4.1, 4.2 und 4.3 detektieren Betriebsparameter werden nun von der Auswerte- und Steuereinrichtung 5 mit in dem Datenspeicher 7 gespeicherten Betriebsparametern, die definierte Betriebsmodi kennzeichnen, verglichen. Mit Hilfe der in dem Datenspeicher 7 gespeicherten Daten wird dann erkannt, dass das Haushaltsgerät 1 derzeit den Betriebsmodus "Arbeitsmodus" ausführt.

Mit Kenntnis des so ermittelten aktuellen Betriebsmodus des Haushaltsgerätes 1 entnimmt die Auswerte- und Steuereinrichtung 5 anschließend aus der Menge der in dem Datenspeicher 7 gespeicherten Daten diejenige Blickrichtung n des Nutzers, welche dem ermittelten Betriebsmodus entspricht. Hier ist dem Betriebsmodus "Arbeitsmodus" des Haushaltsgerätes 1 die in Figur 1 dargestellte Blickrichtung n des Nutzers zugeordnet. Des Weiteren enthält der Datenspeicher 7 zusätzlich die auf dem Display 3 während des jeweiligen Betriebsmodus anzuzeigenden Informationen 6, welche für den Nutzer nützlich sind. Diese Informationen 6 sind während des Arbeitsmodus beispielsweise eine gewählte oder wählbare Leistungsstufe eines Gebläses oder Reinigungselementes. Die Stufen "Stufe 1", "Stufe 2", "Stufe 3" können von dem Nutzer vorzugsweise auch durch Berühren des Displays 3 gewählt werden. Des Weiteren wird dem Nutzer eine Laufzeit in Minuten angezeigt, die das Haushaltsgerät 1 voraussichtlich noch mit der in dem Akkumulator 8 gespeicherten Restenergie bewältigen kann.

Im Gegensatz dazu sind bei dem Betriebsmodus des Haushaltsgerätes 1 gemäß Figur 2, nämlich dem Lademodus für den Akkumulator 8, andere Informationen 6 für den Nutzer relevant, nämlich insbesondere eine Information 6 darüber, welchen Ladestand der Akkumulator 8 derzeit aufweist. Andere Informationen 6, welche grundsätzlich abrufbar sind, nämlich die in Figur 1 dargestellten Informationen 6 über wählbare Leistungsstufen des Haushaltsgerätes 1, werden von der Auswerte- und Steuereinrichtung 5 hingegen nicht für die Darstellung auf dem Display 3 ausgewählt. Den Lademodus des Haushaltsgerätes 1 kann die Auswerte- und Steuereinrichtung 5 anhand des von der Detektionseinrichtung 4.2 detektierten Betriebsparameters erkennen, welcher beinhaltet, dass dem Akkumulator 8 Energie zugeführt wird. Die übrigen Betriebsparameter, nämlich die Stellung des Handgriffs 10 und die Orientierung des Haushaltsgerätes 1 sind verglichen mit denjenigen gemäß Figur 1 jedoch im Wesentlichen gleich.

### Liste der Bezugszeichen

- 1: Haushaltsgerät
- 2: Gerätegehäuse
- 3: Display
- 4.1: Detektionseinrichtung
- 4.2: Detektionseinrichtung
- 4.3: Detektionseinrichtung
- 5: Auswerte- und Steuereinrichtung
- 6: Information
- 7: Datenspeicher
- 8: Akkumulator
- 9: Ladegerät
- 10: Handgriff
- 11: Zubehör
- 12: Gelenk

- n: Blickrichtung
- r: Darstellungsrichtung

## Patentansprüche

1. Mobiles Haushaltsgerät (1), insbesondere Bodenbearbeitungsgerät, mit einem Gerätegehäuse (2), einem einen Teil einer Außenhülle des Gerätegehäuses (2) bildenden Display (3), einer Detektionseinrichtung (4) zur Detektion eines einen aktuell von dem Haushaltsgerät (1) ausgeführten Betriebsmodus kennzeichnenden Betriebsparameters und einer Auswerteund Steuereinrichtung (5) zur Ermittlung des Betriebsmodus anhand des Betriebsparameters und zur Darstellung mindestens einer den aktuellen Betriebsmodus betreffenden Information (6) auf dem Display (3), **dadurch gekennzeichnet, dass** die Auswerte- und Steuereinrichtung (5) eingerichtet ist, eine Darstellungsrichtung (r) der auf dem Display (3) dargestellten Information (6) abhängig von dem ermittelten aktuellen Betriebsmodus des Haushaltsgerätes (1) zu variieren, wobei die Detektionseinrichtung (4) einen Sensor aufweist, welcher ausgewählt ist aus der Menge: Sensor, welcher eingerichtet ist, eine relative Orientierung eines relativ zu dem Gerätegehäuse (2) verstellbaren Handgriffs (10) des Haushaltsgerätes (1) zu detektieren; Kontaktsensor zum Detektieren eines mechanischen Kontaktes des Haushaltsgerätes (1) mit einer Servicestation; Akkumulator-Überwachungseinrichtung, welche eingerichtet ist, ein Laden oder Entladen des Akkumulators (8) zu detektieren.

2. Haushaltsgerät (1) nach Anspruch 1, **dadurch gekennzeichnet, dass** die Auswerte- und Steuereinrichtung (5) eingerichtet ist, abhängig von dem Betriebsmodus auf eine räumliche Orientierung des Haushaltsgerätes (1) und/oder eine Blickrichtung eines Nutzers auf das Haushaltsgerät (1) während des Betriebsmodus zu schließen.

3. Haushaltsgerät (1) nach Anspruch 1 oder 2, **gekennzeichnet durch** einen kommunikationstechnisch mit der Auswerte- und Steuereinrichtung (5) verbundenen Datenspeicher (7), in welchem einerseits eine Mehrzahl von möglichen Betriebsmodi des Haushaltsgerätes (1), und andererseits den Betriebsmodi zugeordnete Darstellungsrichtungen (r) von Informationen (6) auf dem Display (3) gespeichert sind.

4. Haushaltsgerät (1) nach einem der vorhergehenden Ansprüche, **dadurch gekennzeichnet, dass** der Betriebsmodus ausgewählt ist aus der Menge: Arbeitsmodus, bei welchem der Nutzer das Haushaltsgerät (1) bestimmungsgemäß zur Ausführung einer Haushaltsaufgabe, insbesondere für eine Bodenbearbeitung, anwendet; Lademodus, bei welchem das Haushaltsgerät (1) zum Laden eines Akkumulators (8) an ein Ladegerät (9) oder eine Ladestation angeschlossen ist; Servicemodus, bei welchem das Haushaltsgerät (1) zum Empfangen eines Service an eine Servicestation angedockt ist; Ruhemodus, bei welchem das Haushaltsgerät (1) außerhalb eines Arbeitsmodus, Lademodus und Servicemodus abgestellt ist.

5. Haushaltsgerät (1) nach einem der vorhergehenden Ansprüche, **dadurch gekennzeichnet, dass** die dargestellte Information (6) abhängig von dem ermittelten aktuellen Betriebsmodus des Haushaltsgerätes ausgewählt ist aus der Menge: Information (6) über den Ladezustand des Akkumulators (8), Information (6) über den Betriebsmodus des Haushaltsgerätes (1), Information (6) über ein an das Haushaltsgerät (1) angeschlossenes Zubehör (11).

6. Haushaltsgerät (1) nach einem der vorhergehenden Ansprüche, **dadurch gekennzeichnet, dass** die Auswerte- und Steuereinrichtung (5) eingerichtet ist, aus einer Mehrzahl von verfügbaren Informationen (6) nur mindestens eine solche auszuwählen und auf dem Display (3) darzustellen, welche für den aktuellen Betriebsmodus des Haushaltsgerätes (1) als relevant definiert sind.

7. Haushaltsgerät (1) nach einem der vorhergehenden Ansprüche, **dadurch gekennzeichnet, dass** das Display (3) trennbarer oder nicht trennbarer Bestandteil des Gerätegehäuses (2) oder trennbarer oder nicht trennbarer Bestandteil eines Akkumulators (8) des Haushaltsgerätes (1) ist.

8. Haushaltsgerät (1) nach Anspruch 7, **dadurch gekennzeichnet, dass** der Akkumulator (8) ein trennbarer oder nicht trennbarer Bestandteil des Haushaltsgerätes (1) ist.

9. Verfahren zum Betrieb eines mobilen Haushaltsgerätes (1), insbesondere Verfahren zum Betrieb eines Bodenbearbeitungsgerätes, wobei ein einen aktuell von dem Haushaltsgerät (1) ausgeführten Betriebsmodus kennzeichnender Betriebsparameter detektiert wird, wobei anhand des detektierten Betriebsparameters der aktuelle Betriebsmodus ermittelt wird und wobei eine den ermittelten aktuellen Betriebsmodus betreffende Information (6) auf einem Display (3) des Haushaltsgerätes (1) dargestellt wird, **dadurch gekennzeichnet, dass** eine Darstellungsrichtung (r) der auf dem Display (3) dargestellten Information (6) abhängig von dem ermittelten aktuellen Betriebsmodus des Haushaltsgerätes (1) variiert wird, wobei die Detektionseinrichtung (4) einen Sensor aufweist, welcher ausgewählt ist aus der Menge: Sensor, welcher eingerichtet ist, eine relative Orientierung eines relativ zu dem Gerätegehäuse (2) verstellbaren Handgriffs (10) des Haushaltsgerätes (1) zu detektieren; Kontaktsensor zum Detektieren eines mechanischen Kontaktes des Haushaltsgerätes (1) mit einer Servicestation; Akkumulator-Überwachungseinrichtung, welche eingerichtet ist, ein Laden oder Entladen des Akkumulators (8) zu detektieren.

## Claims

1. A mobile household appliance (1), particularly a floor treatment appliance, with an appliance housing (2), a display (3) that forms part of an outer shell of the appliance housing (2), a detection device (4) for detecting an operating parameter that characterizes an operating mode currently carried out by the household appliance (1) and an evaluation and control unit (5) for determining the operating mode based on the operating parameter and for depicting at least one piece of information (6) concerning the current operating mode on the display (3), **characterized in that** the evaluation and control unit (5) is designed for varying a depicting direction (r) of the information (6) depicted on the display (3) in dependence on the determined current operating mode of the household appliance (1), wherein the detection device (4) has a sensor that is selected from the following group: a sensor that is designed for detecting a relative orientation of a handle (10) of the household appliance (1), which can be adjusted relative to the appliance housing (2); a contact sensor for detecting mechanical contact of the household appliance (1) with a service station; an accumulator monitoring device that is designed for detecting charging or discharging of the accumulator (8).

2. The household appliance (1) according to claim 1, **characterized in that** the evaluation and control unit (5) is designed for deducing in dependence on the operating mode a spatial orientation of the household appliance (1) and/or a viewing direction of a user at the household appliance (1) during the operating mode.

3. The household appliance (1) according to claim 1 or 2, **characterized by** a data memory (7), which is communicatively linked to the evaluation and control unit (5) and in which on the one hand a plurality of potential operating modes of the household appliance (1) and on the other hand depicting directions (r) of information (6) on the display (3) allocated to the operating modes are stored.

4. The household appliance (1) according to one of the preceding claims, **characterized in that** the operating mode is selected from the following group: a working mode, in which the user utilizes the household appliance (1) as intended for carrying out a household task, particularly a floor treatment task; a charging mode, in which the household appliance (1) is connected to a charger (9) or a charging station in order to charge an accumulator (8); a service mode, in which the household appliance (1) is docked with a service station in order to receive a service; an idle mode, in which the household appliance (1) is parked outside of a working mode, charging mode and service mode.

5. The household appliance (1) according to one of the preceding claims, **characterized in that** the depicted information (6) is in dependence on the determined current operating mode of the household appliance selected from the following group: information (6) on the charge state of the accumulator (8); information (6) on the operating mode of the household appliance (1), information (6) on an accessory (11) connected to the household appliance (1).

6. The household appliance (1) according to one of the preceding claims, **characterized in that** the evaluation and control unit (5) is designed for only selecting at least one piece of information, which is defined as relevant for the current operating mode of the household appliance (1), from a plurality of available pieces of information (6) and for depicting the at least one selected piece of information on the display (3).

7. The household appliance (1) according to one of the preceding claims, **characterized in that** the display (3) is a separable or inseparable component of the appliance housing (2) or a separable or inseparable component of an accumulator (8) of the household appliance (1).

8. The household appliance (1) according to claim 7, **characterized in that** the accumulator (8) is a separable or inseparable component of the household appliance (1).

9. A method for operating a mobile household appliance (1), particularly a method for operating a floor treatment appliance, wherein an operating parameter that characterizes an operating mode currently carried out by the household appliance (1) is detected, wherein the current operating mode is determined based on the detected operating parameter, and wherein information (6) concerning the determined current operating mode is depicted on a display (3) of the household appliance (1), **characterized in that** a depicting direction (r) of the information (6) depicted on the display (3) is varied in dependence on the determined current operating mode of the household appliance (1), wherein the detection device (4) has a sensor that is selected from the following group: a sensor that is designed for detecting a relative orientation of a handle (10) of the household appliance (1), which can be adjusted relative to the appliance housing (2); a contact sensor for detecting mechanical contact of the household appliance (1) with a service station; an accumulator monitoring device that is designed for detecting charging or discharging of the accumulator (8).

## Revendications

1. Appareil ménager mobile (1), en particulier appareil de travail du sol, avec un boîtier d'appareil (2), un écran (3) formant une partie d'une enveloppe extérieure du boîtier d'appareil (2), un dispositif de détection (4) pour la détection d'un paramètre de fonctionnement caractérisant un mode de fonctionnement actuellement exécuté par l'appareil ménager (1) et un dispositif d'évaluation et de commande (5) pour déterminer le mode de fonctionnement à l'aide du paramètre de fonctionnement et pour représenter sur l'écran (3) au moins une information (6) concernant le mode de fonctionnement actuel, **caractérisé en ce que** le dispositif d'évaluation et de commande (5) est conçu pour faire varier une direction de représentation (r) de l'information (6) représentée sur l'écran (3) en fonction du mode de fonctionnement actuel déterminé de l'appareil ménager (1), le dispositif de détection (4) présentant un capteur qui est choisi dans la quantité: Capteur conçu pour détecter une orientation relative d'une poignée (10) de l'appareil ménager (1) réglable par rapport au boîtier (2) de l'appareil; Capteur de contact pour détecter un contact mécanique de l'appareil ménager (1) avec une station de service; Dispositif de surveillance de l'accumulateur conçu pour détecter une charge ou une décharge de l'accumulateur (8).

2. Appareil ménager (1) selon la revendication 1, car **caractérisé en ce que** le dispositif d'évaluation et de commande (5) est conçu pour déduire, en fonction du mode de fonctionnement, une orientation spatiale de l'appareil ménager (1) et/ou une direction du regard d'un utilisateur sur l'appareil ménager (1) pendant le mode de fonctionnement.

3. Appareil ménager (1) selon la revendication 1 ou 2, **caractérisé par** une mémoire de données (7) reliée par une technique de communication au dispositif d'évaluation et de commande (5), dans laquelle sont mémorisés d'une part une pluralité de modes de fonctionnement possibles de l'appareil ménager (1), et d'autre part des directions de représentation (r) d'informations (6) sur l'écran (3), associées aux modes de fonctionnement.

4. Appareil ménager (1) selon l'une des revendications précédentes, **caractérisé en ce que** le mode de fonctionnement est choisi parmi l'ensemble: Mode travail, dans lequel l'utilisateur utilise l'appareil ménager (1) conformément à sa destination pour effectuer une tâche ménagère, en particulier pour un travail du sol; Mode charge, dans lequel l'appareil ménager (1) est connecté à un chargeur (9) ou à une station de charge pour charger un accumulateur (8); Mode service, dans lequel l'appareil ménager (1) est arrimé à une station de service pour recevoir un service; Mode repos, dans lequel l'appareil ménager (1) est arrêté en dehors d'un mode travail, d'un mode charge et d'un mode service.

5. Appareil ménager (1) selon l'une des revendications précédentes, **caractérisé en ce que** l'information (6) est choisie en fonction du mode de fonctionnement actuel déterminé de l'appareil ménager parmi l'ensemble: information (6) sur l'état de charge de l'accumulateur (8), information (6) sur le mode de fonctionnement de l'appareil ménager (1), information (6) sur un accessoire (11) raccordé à l'appareil ménager (1).

6. Appareil ménager (1) selon l'une des revendications précédentes, **caractérisé en ce que** le dispositif d'évaluation et de commande (5) est conçu pour sélectionner et représenter sur l'écran (3), parmi une pluralité d'informations (6) disponibles, au moins une seule de celles qui sont définies comme pertinentes pour le mode de fonctionnement actuel de l'appareil ménager (1).

7. Appareil ménager (1) selon l'une des revendications précédentes, **caractérisé en ce que** l'écran (3) est un composant séparable ou non séparable du boîtier (2) de l'appareil ou un composant séparable ou non séparable d'un accumulateur (8) de l'appareil ménager (1).

8. Appareil ménager (1) selon la revendication 7, **caractérisé en ce que** l'accumulateur (8) est un composant séparable ou non séparable de l'appareil ménager (1).

9. Procédé pour faire fonctionner un appareil ménager mobile (1), en particulier procédé pour faire fonctionner un appareil de travail du sol, dans lequel un paramètre de fonctionnement caractérisant un mode de fonctionnement actuellement exécuté par l'appareil ménager (1) est détecté, dans lequel le mode de fonctionnement actuel est déterminé à l'aide du paramètre de fonctionnement détecté et dans lequel une information (6) concernant le mode de fonctionnement actuel déterminé est représentée sur un écran (3) de l'appareil ménager (1), **caractérisé en ce qu'**une direction de représentation (r) de l'information (6) représentée sur l'écran (3) est modifiée en fonction du mode de fonctionnement actuel déterminé de l'appareil ménager (1), le dispositif de détection (4) présentant un capteur qui est choisi dans la quantité: Capteur conçu pour détecter une orientation relative d'une poignée (10) de l'appareil ménager (1) réglable par rapport au boîtier (2) de l'appareil; Capteur de contact pour détecter un contact mécanique de l'appareil ménager (1) avec une station de service; Dispositif de surveillance de l'accumulateur conçu pour détecter une charge ou une décharge de l'accumulateur (8).
